# EUROPÄISCHE PATENTSCHRIFT

(11) **EP 3 389 897 B1**
(45) Veröffentlichungstag und Bekanntmachung des Hinweises auf die Patenterteilung: **14.10.2020**
(21) Anmeldenummer: 16820209.1
(22) Anmeldetag: 14.12.2016
(51) Int. Cl.: B22F 3/105, B22F 3/20, B22F 3/22, C22C 1/04, C22C 5/00, C22C 5/04, C22C 33/02, H01T 13/39, B32B 15/01, C22C 19/05, C22C 28/00, C22C 38/00, C22C 38/02, C22C 38/04, C22C 38/40, C22C 38/44, B33Y 70/00, H01T 19/04, H01T 21/02, H01T 23/00

(54) **VERBUNDWERKSTOFF, VERFAHREN ZUM HERSTELLEN EINES VERBUNDWERKSTOFFS UND ENTLADUNGSKOMPONENTE MIT EINEM SOLCHEN VERBUNDWERKSTOFF**
COMPOSITE MATERIAL, METHOD FOR MANUFACTURING A COMPOSITE MATERIAL AND DISCHARGE COMPONENT COMPRISING SAID COMPOSITE MATERIAL
MATÉRIAU COMPOSITE, MÉTHODE DE FABRICATION D'UN MATÉRIAU COMPOSITE ET COMPOSANT À DÉCHARGE COMPRENANT LEDIT MATÉRIAU COMPOSITE

(30) Priorität: 15.12.2015 DE 102015225302
(43) Veröffentlichungstag der Anmeldung: 24.10.2018
(73) Patentinhaber: OBE Ohnmacht & Baumgärtner GmbH & Co. KG, 75228 Ispringen (DE)
(72) Erfinder: BURKHARDT, Carlo, 75331 Engelsbrand (DE)
(74) Vertreter: Kordel, Mattias
(86) Internationale Anmeldenummer: PCT/EP2016/081026
(87) Internationale Veröffentlichungsnummer: WO 2017/102858

(56) Entgegenhaltungen:
- WO-A1-2015/125406
- US-A- 3 957 451
- US-A- 5 551 902
- US-A1- 2006 043 855
- US-A1- 2012 169 206

## Beschreibung

Die Erfindung betrifft einen Verbundwerkstoff, ein Verfahren zum Herstellen eines solchen Verbundwerkstoffs, und eine Entladungskomponente mit einem solchen Verbundwerkstoff.

Entladungskomponenten, die typischerweise als Elektroden ausgebildet oder an Elektroden angeordnet sein können, werden eingesetzt, um eine Entladung, beispielsweise einen Funkenüberschlag, zwischen der Entladungskomponente und einer Gegenelektrode zu bewirken. Aufgrund der unmittelbar vor der Entladung anliegenden, hohen elektrischen Spannungen, der während der Entladung fließenden, hohen elektrischen Ströme, und der in einer Entladung bestehenden, hohen Temperaturen kann es zu einer Erosion und - insbesondere dann, wenn die Entladung in einer korrosiven Atmosphäre erfolgt - auch zu einer Korrosion der Entladungskomponente kommen. Es ist grundsätzlich möglich, eine mehrschichtige Entladungskomponente vorzusehen, welche eine Basismetallschicht aus einem weniger edlen Metall sowie eine Edelmetallschicht aus einem edleren Metall aufweist, wobei die Edelmetallschicht schichtförmig auf der Basismetallschicht angeordnet ist. Die Entladungskomponente kann dann so eingesetzt werden, dass eine Entladung im Bereich der Edelmetallschicht erfolgt, die sowohl gegenüber Erosion als auch gegenüber Korrosion stabiler ist als die Basismetallschicht. Zugleich wird die Basismetallschicht durch die Edelmetallschicht geschützt. Eine solche mehrschichtige Entladungskomponente ist allerdings in Hinblick auf ihre geometrische Ausgestaltung wenig flexibel und benötigt darüber hinaus eine vergleichsweise große Menge des edleren Metalls, sodass sie auch im Einsatz und in der Herstellung teuer ist.

Die amerikanische Offenlegungsschrift US 3 957 451 A offenbart duktile Rutheniumlegierungen, wobei diese durch Mischen von etwa 75-85% Rutheniumpulver mit etwa 15-25% eines vorlegierten Pulvers bereitgestellt werden, welches im Wesentlichen aus Nickel, Chrom, Wolfram, Silizium und Eisen besteht, wobei die Pulver eine Maschenweite von weniger als 200 aufweisen, wobei die Mischung mit einem Bindemittel gemischt wird, um eine einfache Handhabung beim Pressen eines Grünteils mit Drücken von etwa 35.000-50.000 psi zu ermöglichen, gefolgt von einem Sintern in trockenem Wasserstoff oder Inertgas oder im Vakuum, mit einer Sintertemperatur und -zeit von etwa 2050° bis etwa 2150° F für Zeiträume von etwa 45 Minuten bis etwa 30 Minuten.

In der amerikanischen Offenlegungsschrift US 2006/043855 A1 ist eine Zündkerze mit höherer Lebensdauer offenbart, welche mit einer Mittelelektrode und einer Seitenelektrode versehen ist, um eine Funkenentladungslücke zwischen der Mittelelektrode und der Seitenelektrode zu bilden, wobei mindestens eine der Mittelelektrode und der Seitenelektrode - umfassend ein Edelmetallteil - der Funkenentladungslücke zugewandt ist, in welcher ein Schwitzphänomen des Edelmetallelements unterdrückt werden kann, während Funkenabrieb, Oxidationsabrieb und abnormaler Abrieb des Edelmetallteils unterdrückt werden können. Gemäß der Offenlegungsschrift umfasst die Zündkerze eine Mittelelektrode und eine Seitenelektrode, die auf einer Seite der Mittelelektrode angeordnet ist, so dass eine Funkenentladungslücke zwischen der Mittelelektrode und der Seitenelektrode gebildet wird. Die Mittelelektrode und die Seitenelektrode beinhalten erste und zweite Edelmetallspitzen. Die ersten und zweiten Edelmetallspitzen stehen der Funkenentladungslücke gegenüber, so dass die Funkenentladungslücke gebildet wird. Die Edelmetallspitzen enthalten Ir als Hauptkomponente, 0,3 Masse-% bis 43 Masse-% Rh, 5,2 Masse-% bis 41 Masse-% Ru und 0,4 Masse-% bis 19 Masse-% Ni.

Der amerikanischen Offenlegungsschrift US 2012/169206 A1 ist ein Elektrodenmaterial auf Rutheniumbasis zu entnehmen, welches zur Verwendung in einer Zündkerze vorgesehen ist. Das Elektrodenmaterial besteht aus Ruthenium (Ru) und einem Edelmetall. Das Ruthenium (Ru) ist der größte Einzelbestandteil des Elektrodenmaterials auf Gew.-%-Basis. Das Elektrodenmaterial kann eine Dichte von weniger als oder gleich etwa 15,5 g/cm³ aufweisen und kann mindestens ein weiteres Edelmetall beinhalten. Das Elektrodenmaterial kann in einer Zündkerze verwendet werden, die eine metallische Hülle mit einer axialen Bohrung, einen Isolator mit einer axialen Bohrung aufweist und zumindest teilweise innerhalb der axialen Bohrung der metallischen Hülle angeordnet ist, wobei sie außerdem eine Mittelelektrode, die zumindest teilweise innerhalb der axialen Bohrung des Isolators angeordnet ist, und eine Masseelektrode, die an einem freien Ende der metallischen Hülle befestigt ist, aufweist. Die Mittelelektrode, die Masseelektrode oder beides kann zumindest teilweise aus der Elektrodenlegierung gebildet sein.

Der Offenlegungsschrift der internationalen Anmeldung WO 2015/125406 A1 ist eine Zündkerze zu entnehmen, wobei eine Mittelelektrode und/oder eine Erdungselektrode mit einer Spitze versehen wird. Die Zündkerze ist mit einer Mittelelektrode und einer Erdungselektrode versehen, die von der Mittelelektrode mit einem Spalt beabstandet angeordnet sind, wobei die Zündkerze dadurch charakterisiert ist, dass eine Spitze vorhanden ist, die den Spalt auf der Mittelelektrode und/oder der Erdungselektrode bildet; und dass die Spitze eine Metallmatrix aufweist, deren Hauptbestandteil Ir ist, und Oxidpartikel, die mindestens eine Oxidart mit einer Perowskitstruktur der allgemeinen Formel ABO3 enthalten (wobei A mindestens eine Spezies ist, die aus den Elementen der Gruppe 2 des Periodensystems ausgewählt ist, und B mindestens eine Spezies ist, die aus den Metallelementen ausgewählt ist). Der Anteil der Oberfläche, die von den Oxidpartikeln bei Beobachtung des Querschnitts der Spitze eingenommen wird, beträgt 1% bis einschließlich 13%.

Der amerikanischen Offenlegungsschrift US 5 551 902 A ist eine Verbundelektrode, insbesondere eine Elektrode für eine Zündkerze, zu entnehmen, welche einen Kern aufweist, der aus einem ersten elektrisch leitfähigen Material und einem Gehäuse besteht, das so verformt ist, dass es den Kern umgibt, und der wiederum aus einem zweiten elektrisch leitfähigen Material besteht. Das Gehäuse wird in einem einzigen Strangpressschritt geformt, der auch den Kern formt und gleichzeitig das Querschnittsprofil der Elektrode bildet.

Der Erfindung liegt die Aufgabe zugrunde, einen Verbundwerkstoff, ein Verfahren zum Herstellen eines Verbundwerkstoffs, und eine Entladungskomponente mit einem solchen Verbundwerkstoff zu schaffen, wobei die genannten Nachteile vermieden werden.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verbundwerkstoff geschaffen wird, der eine erste metallische Werkstoffkomponente und eine zweite metallische Werkstoffkomponente aufweist. Dabei ist die erste Werkstoffkomponente von der zweiten Werkstoffkomponente verschieden, wobei die erste Werkstoffkomponente beispielsweise einen niedrigeren Schmelzpunkt aufweisen kann als die zweite Werkstoffkomponente. Dabei ist vorgesehen, dass die zweite Werkstoffkomponente partikelförmig, vorzugsweise in Form kristalliner Partikel mit der ersten Werkstoffkomponente vermengt, beziehungsweise in die erste Werkstoffkomponente eingelagert ist. Ein solcher Werkstoff ist in besonderer Weise geeignet zur Verwendung für eine erosions- und korrosionsbeständige Entladungskomponente, wobei es insbesondere möglich ist - ganz besonders im Vergleich zu einem Schichtaufbau - durch die Vermengung oder Einlagerung der zweiten Werkstoffkomponente mit der oder in die erste Werkstoffkomponente Material der zweiten Werkstoffkomponente einzusparen. Hierdurch ist der Verbundwerkstoff kostengünstig. Insgesamt kann durch eine Verteilung der zweiten Werkstoffkomponente in der ersten Werkstoffkomponente eine größere effektive Fläche für die Entladung im Bereich der zweiten Werkstoffkomponente bereitgestellt werden, sodass sich ein lokal reduzierter Verschleiß ergibt. Bevorzugt weist die vorzugsweise höher schmelzende, zweite Werkstoffkomponente auch einen höheren spezifischen Leitwert auf als die bevorzugt niedriger schmelzende, erste Werkstoffkomponente, wodurch Entladungen bevorzugt im Bereich der zweiten Werkstoffkomponente starten, sich jedoch einen Entladungspfad über die erste Werkstoffkomponente suchen. Insgesamt sinkt damit der Verschleiß insbesondere auch der ersten Werkstoffkomponente. Weiterhin zeigt sich, dass Entladungskomponenten typischerweise nach einem Abbrand von etwa 200 µm - gemessen von einer ursprünglichen Oberfläche in Tiefenrichtung gesehen - verschlissen sind, sodass sie entsorgt und ersetzt werden müssen. Durch Verwendung des Verbundwerkstoffs kann dabei teures Material eingespart werden, weil das typischerweise teurere Material der zweiten Werkstoffkomponente durch die Vermengung oder Einlagerung in geringerer Menge vorgesehen ist, als wenn es beispielsweise in Form einer Beschichtung auf der ersten Werkstoffkomponente vorgesehen wäre, oder wenn gar die Entladungskomponente komplett aus dem Material der zweiten Werkstoffkomponente gebildet wäre. Kommt es zur Erosion der Entladungskomponente, erodiert zunächst insbesondere das niedriger schmelzende Material der ersten Werkstoffkomponente, wobei das Material der zweiten Werkstoffkomponente insbesondere in Form an der Oberfläche der Entladungskomponente vorhandener Partikel erhalten bleibt, solange diese ausreichend von dem Material der ersten Werkstoffkomponente gestützt werden. Ist das Material der ersten Werkstoffkomponente so stark erodiert, dass die Partikel nicht mehr gehalten werden, fallen diese aus der ersten Werkstoffkomponente heraus, wobei gleichsam die dahinter angeordneten Partikel der zweiten Werkstoffkomponente freigelegt werden und die herausgefallenen, vorderen Partikel ersetzen.

Unter einer "Entladungskomponente" wird hier insbesondere eine Vorrichtung oder ein Teil einer Vorrichtung verstanden, welche eingerichtet und bestimmungsgemäß vorgesehen ist, um Ausgangspunkt für eine elektrische Entladung, insbesondere zu einer Gegenelektrode, zu sein. Eine solche Entladungskomponente kann beispielsweise ein Teil einer Elektrode, an einer Elektrode angeordnet, oder selbst als Elektrode ausgebildet sein. Insbesondere ist es möglich, dass die Entladungskomponente als Spitze, insbesondere Zündspitze, einer Elektrode ausgebildet ist.

Unter dem Begriff "Entladung" wird hier insbesondere eine Funkenentladung oder ein Funkenüberschlag, eine Plasma-Entladung, eine dielektrische Barriereentladung oder stille elektrische Entladung, eine Korona-Entladung, oder eine Bogenentladung verstanden. Die Entladung kann sowohl mittels einer Gleichspannung als auch mittels einer Wechselspannung erzeugt werden. Die Entladungskomponente kann insbesondere als Funkenbildungskomponente ausgebildet sein.

Unter einem Verbundwerkstoff wird hier allgemein ein Werkstoff verstanden, der wenigstens zwei verschiedene, vorzugsweise Stoff-, form- und/oder kraftschlüssig miteinander verbundene Werkstoffe aufweist, wobei die zwei verschiedenen Werkstoffe vorzugsweise in verschiedenen, räumlich voneinander abgrenzbaren Bereichen vorliegen. Sie liegen also bevorzugt nebeneinander in dem Verbundwerkstoff vor.

Unter einer Werkstoffkomponente wird hier insbesondere ein von dem Verbundwerkstoff umfasster Werkstoff verstanden. Die Werkstoffkomponente kann als Reinstoff, insbesondere als chemisches Element oder als Verbindung, insbesondere als kovalente Verbindung, als ionische Verbindung, als Komplexverbindung, als metallische Verbindung, und/oder als Legierung vorliegen.

Unter dem Begriff "Schmelzpunkt" wird hier neben einem - im allgemeinen nur für Reinstoffe genau bekannten - Punkt auf der Temperaturskala auch ein Schmelzbereich verstanden, wie er insbesondere bei Werkstoffkomponenten vorliegen kann, welche eine Mehrzahl verschiedener Stoffe aufweisen.

Dass die zweite Werkstoffkomponente mit der ersten Werkstoffkomponente vermengt ist, bedeutet insbesondere, dass die erste Werkstoffkomponente und die zweite Werkstoffkomponente in dem Verbundwerkstoff nebeneinander vorliegen. Insbesondere ist es möglich, dass - vorzugsweise kristalline - Partikel der zweiten Werkstoffkomponente neben - vorzugsweise kristallinen - Partikeln der ersten Werkstoffkomponente vorliegen. Es ist auch möglich, dass Partikel einer Werkstoffkomponente, ausgewählt aus der ersten und der zweiten Werkstoffkomponente, in einem teilweise oder vollständig zusammenhängenden Material (Matrix) der anderen Werkstoffkomponente, ausgewählt aus der zweiten und der ersten Werkstoffkomponente, verteilt sind. Bei dem Verbundwerkstoff kann es sich also um ein Gemenge oder um einen Einlagerungswerkstoff handeln. Auch eine Mischform aus einem Gemenge und einem Einlagerungswerkstoff ist möglich. Auch können Pfade sich berührender Partikel aus einer selben der beiden Werkstoffkomponenten für eine der Werkstoffkomponenten oder auch für beide Werkstoffkomponenten in dem Verbundwerkstoff vorliegen. Es ist möglich, dass die ein Gemenge bildenden Partikel der ersten und zweiten Werkstoffkomponenten in einigermaßen gleichmäßiger Verteilung in dem Verbundwerkstoff vorliegen.

Gemäß der Erfindung ist vorgesehen, dass die zweite Werkstoffkomponente partikelförmig in die erste Werkstoffkomponente eingelagert ist. Dies bedeutet, dass die zweite Werkstoffkomponente in der ersten Werkstoffkomponente abgrenzbare Domänen bildet, also räumliche Bereiche, die zumindest bereichsweise von der ersten Werkstoffkomponente umschlossen sind, wobei sich in diesen Domänen oder räumlichen Bereichen die zweite Werkstoffkomponente befindet. Diese Bereiche oder Domänen sind dann insbesondere frei von der ersten Werkstoffkomponente und weisen bevorzugt nur die zweite Werkstoffkomponente auf.

Gemäß einer bevorzugten Ausgestaltung des Verbundwerkstoffs liegt die zweite Werkstoffkomponente in der ersten Werkstoffkomponente homogen verteilt vor. Dabei ergibt sich vorzugsweise zumindest im räumlichen Mittel eine gleichmäßige Verteilung der zweiten Werkstoffkomponente in der ersten Werkstoffkomponente. Es ist aber auch möglich, dass die zweite Werkstoffkomponente inhomogen in der ersten Werkstoffkomponente verteilt ist, wobei insbesondere Bereiche vorgesehen sein können, in welchen die Partikel der zweiten Werkstoffkomponente mit höherer Anzahldichte vorliegen, als in anderen Bereichen.

Gemäß der Erfindung ist vorgesehen, dass die erste Werkstoffkomponente eine zusammenhängende Matrix bildet, in welche die zweite Werkstoffkomponente partikelförmig eingelagert ist. Dabei bedeutet der Begriff "zusammenhängend" insbesondere, dass die erste Werkstoffkomponente nicht in Form voneinander separierter, abgeschlossener Domänen oder Bereiche vorliegt, sondern dass die Bereiche der ersten Werkstoffkomponente miteinander verbunden sind, insbesondere durch Stege, Brücken oder andere räumliche Ausprägungen der ersten Werkstoffkomponente. Die erste Werkstoffkomponente bildet auf diese Weise eine Matrix, in welche die zweite Werkstoffkomponente partikelförmig eingelagert ist, analog beispielsweise zur Einbettung von Rosinen in einen Kuchenteig. Der Verbundwerkstoff kann daher auch als Metall-Matnx-Verbundwerkstoff aufgefasst werden, der aus einer zusammenhängenden, niedriger schmelzenden Metallmatrix besteht, in welche ein höher schmelzender Werkstoff, nämlich die zweite Werkstoffkomponente, eingelagert ist.

Gemäß einer Weiterbildung der Erfindung ist vorgesehen, dass die zweite Werkstoffkomponente diskontinuierlich in die erste Werkstoffkomponente eingelagert ist. Dies bedeutet insbesondere, dass Bereiche oder Domänen der zweiten Werkstoffkomponente untereinander keinen Kontakt haben, insbesondere also separat voneinander angeordnet sind und sich insbesondere nicht berühren. Bevorzugt ist die zweite Werkstoffkomponente in Form separater Partikel in die erste Werkstoffkomponente eingelagert. Die einzelnen Partikel sind bevorzugt vollständig von der ersten Werkstoffkomponente umgriffen oder haben - in Randbereichen des Verbundwerkstoffs - Kontakt zu einer äußeren Umgebung desselben, nicht jedoch Kontakt zu anderen Partikeln der zweiten Werkstoffkomponente. Dies ist vorteilhaft, weil so eine vergleichswiese geringe Anzahldichte der Partikel der zweiten Werkstoffkomponente bereitgestellt werden kann, wodurch der Verbundwerkstoff kostengünstig herstellbar ist.

Die Einbettung der zweiten Werkstoffkomponente in die zusammenhängende Matrix der ersten Werkstoffkomponente hat insbesondere den Vorteil, dass bei Erwärmung, wie sie beispielsweise im Betrieb einer Entladungskomponente auftritt, sich der Matrixwerkstoff der ersten Werkstoffkomponente stärker ausdehnt als der eingelagerte Werkstoff der zweiten Werkstoffkomponente, wodurch die Partikel der zweiten Werkstoffkomponente in der Matrix der ersten Werkstoffkomponente verfestigt werden. Im Gegensatz zu einem Schichtaufbau, bei dem verschiedene thermische Ausdehnungskoeffizienten zu einer Erosion des Materials führen, führt also hier eine größere Ausdehnung des Matrixwerkstoffs zu einem festeren Halt der eingelagerten Partikel der zweiten Werkstoffkomponente in der Matrix.

Dabei zeigt sich, dass die erste Werkstoffkomponente mit dem bevorzugt niedrigeren Schmelzpunkt bevorzugt einen größeren Wärmeausdehnungskoeffizienten aufweist, als die zweite Werkstoffkomponente mit dem vorzugsweise höheren Schmelzpunkt.

Gemäß einer Weiterbildung der Erfindung ist also vorgesehen, dass die erste Werkstoffkomponente einen niedrigeren Schmelzpunkt aufweist als die zweite Werkstoffkomponente.

Gemäß der Erfindung ist vorgesehen, dass die zweite Werkstoffkomponente edler ist als die erste Werkstoffkomponente. Hierdurch ist die zweite Werkstoffkomponente insbesondere bei einer Verwendung des Verbundwerkstoffs für eine Entladungskomponente zugleich stabiler gegen Erosion und Korrosion als die erste Werkstoffkomponente. Dabei wird unter dem Begriff "edler" insbesondere verstanden, dass die zweite Werkstoffkomponente ein größeres Standardpotential aufweist als die erste Werkstoffkomponente. Dabei wird unter einem Standardpotential insbesondere das Standardpotential eines Redoxpaares der jeweiligen Werkstoffkomponente verstanden, nämlich die unter Standardbedingungen messbare elektrische Spannung zwischen einer Wasserstoffhalbzelle und einer Halbzelle dieses Redoxpaares. Dabei gilt, dass je positiver - also größer - das Standardpotential ist, desto edler die entsprechende Werkstoffkomponente ist. Vorzugsweise weist die zweite Werkstoffkomponente ein Standardpotential auf, welches größer ist als Null, wobei sie edler ist als Wasserstoff, für welchen das Standardpotential per Definition Null ist. Vorzugsweise weist auch die erste Werkstoffkomponente ein Standardpotential auf, welches größer ist als Null. Das Standardpotential der zweiten Werkstoffkomponente ist bevorzugt größer als das Standardpotential der ersten Werkstoffkomponente. Es ist möglich, dass die erste Werkstoffkomponente ein Standardpotential aufweist, welches kleiner ist als Null. Auch in diesem Fall weist bevorzugt die zweite Werkstoffkomponente ein Standardpotential auf, welches größer ist als Null.

Es ist insbesondere möglich, dass die erste Werkstoffkomponente ein Unedelmetall oder eine Unedelmetalllegierung ist, wobei die zweite Werkstoffkomponente ein Edelmetall oder eine Edelmetalllegierung ist.

Gemäß der Erfindung ist vorgesehen, dass die erste Werkstoffkomponente eine Nickelbasislegierung aufweist oder aus einer Nickelbasislegierung besteht. Dabei wird unter einer Nickelbasislegierung insbesondere eine Legierung verstanden, deren Hauptbestandteil Nickel ist, wobei die Legierung mindestens ein weiteres chemisches Element aufweist. Bevorzugt ist die Nickelbasislegierung mittels eines Schmelzverfahrens hergestellt. Eine Nickelbasislegierung verfügt über eine gute Korrosions- und/oder Hochtemperaturbeständigkeit. Zugleich ist sie relativ kostengünstig.

Alternativ ist es gemäß der Erfindung vorgesehen, dass die erste Werkstoffkomponente eine umformbare Eisenlegierung, insbesondere Stahl, aufweist, oder aus einer umformbaren Eisenlegierung, insbesondere Stahl, besteht. Bevorzugt weist die erste Werkstoffkomponente rostfreien Stahl auf oder besteht aus rostfreiem Stahl. Auch umformbare Eisenlegierungen, insbesondere Stähle, und ganz besonders rostfreie Stähle, können günstige Korrosions- und/oder Hochtemperaturbeständigkeiten aufweisen, wobei sie zugleich kostengünstig sind.

Gemäß der Erfindung ist alternativ oder zusätzlich vorgesehen, dass die erste Werkstoffkomponente eine Legierung aufweist oder aus einer Legierung besteht, die als Hauptbestandteil Nickel und als wenigstens ein weiteres chemisches Element Chrom aufweist. Die Legierung weist Nickel als Hauptkomponente und Chrom als wichtigste - das heißt insbesondere in Masseprozent häufigste - Nebenkomponente auf. Solche Legierungen sind auch unter der Bezeichnung "Inconel" bekannt. Sie eignen sich insbesondere für Hochtemperatur-Anwendungen und sind besonders geeignet zur Herstellung von Entladungskomponenten. Weiterhin sind sie gegen Korrosion beständig, sodass sie auch für Anwendungen in extremen Umgebungen geeignet sind. Beim Erhitzen bildet sich eine stabile Oxidschicht, welche die Oberfläche schützt. Die Festigkeit bleibt über einen breiten Temperaturbereich erhalten. Dabei sind solche Legierungen insbesondere Aluminium und auch bestimmten Stählen überlegen.

Die erste Werkstoffkomponente weist neben Nickel und Chrom vorzugsweise wenigstens ein Element auf, welches ausgewählt ist aus einer Gruppe bestehend aus Eisen, Molybdän, Niob, Kobalt, Mangan, Kupfer, Aluminium, Titan, Silizium, Kohlenstoff, Stickstoff, Schwefel, Phosphor, Tantal, und Bor.

Gemäß einem Ausführungsbeispiel des Verbundwerkstoffs ist vorgesehen, dass die erste Werkstoffkomponente folgende Zusammensetzung - alle Angaben in Masseprozent - aufweist:

| | |
|---|---|
| - Nickel | mindestens 72; |
| - Chrom | mindestens 14 bis höchstens 17; |
| - Eisen | mindestens 6 bis höchstens 10; |
| - Kobalt | höchstens 1; |
| - Kohlenstoff | höchstens 0,15; |
| - Mangan | höchstens 1; |
| - Schwefel | höchstens 0,25; |
| - Silizium | höchstens 0,5; |
| - Kupfer | höchstens 0,5; |
| - Phosphor | höchstens 0,2; |
| - Titan | höchstens 0,3; |
| - Aluminium | höchstens 0,3; |
| - Bor | höchstens 0,006; |

Rest: herstellungsbedingte Verunreinigungen. Vorzugsweise ist die erste Werkstoffkomponente Inconel 600, Nicrofer 7216H, oder hat die Werkstoff-Nr. 2.4816.

Gemäß einem weiteren Ausführungsbeispiel des Verbundwerkstoffs ist vorgesehen, dass die erste Werkstoffkomponente folgende Zusammensetzung aufweist - alle Angaben in Masseprozent:

| | |
|---|---|
| - Nickel | mindestens 58 bis höchstens 63; |
| - Chrom | mindestens 21 bis höchstens 25; |
| - Aluminium | mindestens 1 bis höchstens 1,7; |
| - Kohlenstoff | höchstens 0,1; |
| - Mangan | höchstens 1,5; |
| - Kobalt | höchstens 1,5; |
| - Schwefel | höchstens 0,015; |
| - Phosphor | höchstens 0,02; |
| - Silizium | höchstens 0,5; |
| - Kupfer | höchstens 1,0; |
| - Titan | höchstens 0,5; |
| - Bor | höchstens 0,006; |

Rest: Eisen und herstellungsbedingte Verunreinigungen. Vorzugsweise ist die erste Werkstoffkomponente Inconel 601 oder weist die Werkstoff-Nr. 2.4851 auf.

Gemäße einem weiteren Ausführungsbeispiel des Verbundwerkstoffs weist die erste Werkstoffkomponente folgende Zusammensetzung auf - alle Angaben in Masseprozent:

| | |
|---|---|
| - Nickel | mindestens 58; |
| - Chrom | mindestens 20 bis höchstens 23; |
| - Molybdän | mindestens 8 bis höchstens 10; |
| - Niob | mindestens 3,15 bis höchstens 4,15; |
| - Eisen | höchstens 5; |
| - Kobalt | höchstens 1; |
| - Kupfer | höchstens 0,5; |
| - Silizium | höchstens 0,5; |
| - Mangan | höchstens 0,5; |
| - Aluminium | höchstens 0,4; |
| - Titan | höchstens 0,4; |
| - Kohlenstoff | höchstens 0,1; |
| - Phosphor | höchstens 0,02; |
| - Schwefel | höchstens 0,015; |
| - Stickstoff | höchstens 0,02; |

Rest: herstellungsbedingte Verunreinigungen. Vorzugsweise weist die erste Werkstoffkomponente einen gemeinsamen Anteil an Niob und Tantal- in Masseprozent - von mindestens 3,15 bis höchstens 4,15 auf. Vorzugsweise ist die erste Werkstoffkomponente Inconel 625 oder weist die Werkstoff-Nr. 2.4856 auf.

Gemäß einem weiteren Ausführungsbeispiel des Verbundwerkstoffs weist die erste Werkstoffkomponente folgende Zusammensetzung - alle Angaben in Masseprozent - auf:

| | |
|---|---|
| - Nickel | mindestens 50 bis höchstens 55; |
| - Chrom | mindestens 17 bis höchstens 21; |
| - Molybdän | mindestens 2,8 bis höchstens 3,3; |
| - Niob (+Tantal) | mindestens 4,75 bis höchstens 5,5; |
| - Titan | mindestens 0,65 bis höchstens 1,15; |
| - Aluminium | mindestens 0,2 bis höchstens 0,8; |
| - Kobalt | höchstens 1; |
| - Kohlenstoff | höchstens 0,08; |
| - Mangan | höchstens 0,35; |
| - Silizium | höchstens 0,35; |
| - Phosphor | höchstens 0,015; |
| - Schwefel | höchstens 0,015; |
| - Bor | höchstens 0,006; |
| - Kupfer | höchstens 0,3; |

Rest: Eisen und herstellungsbedingte Verunreinigungen. Vorzugsweise ist die erste Werkstoffkomponente Inconel 718 oder weist die Werkstoff-Nr. 2.4668 auf.

Gemäß einem weiteren Ausführungsbeispiel des Verbundwerkstoffs weist die erste Werkstoffkomponente folgende Zusammensetzung - alle Angaben in Masseprozent - auf:

| | |
|---|---|
| - Chrom | mindestens 16 bis höchstens 18,5; |
| - Nickel | mindestens 10 bis höchstens 15; |
| - Molybdän | mindestens 2 bis höchstens 3; |
| - Kohlenstoff | höchstens 0,035; |
| - Silizium | höchstens 1; |
| - Mangan | höchstens 2; |
| - Phosphor | höchstens 0,045; |
| - Schwefel | höchstens 0,03; |
| - Stickstoff | höchstens 0,11; |

Rest: Eisen und herstellungsbedingte Verunreinigungen. Bevorzugt ist die erste Werkstoffkomponente ein nichtrostender Stahl mit der Bezeichnung X2CrNiMo17-12-2 oder weist die Werkstoff-Nr. 1.4404 auf.

Gemäß einem weiteren Ausführungsbeispiel des Verbundwerkstoffs weist die erste Werkstoffkomponente folgende Zusammensetzung - alle Angaben in Masseprozent - auf:

| | |
|---|---|
| - Chrom | mindestens 19 bis höchstens 24; |
| - Nickel | mindestens 11 bis höchstens 15; |
| - Kohlenstoff | höchstens 0,2; |
| - Silizium | höchstens 2,5; |
| - Mangan | höchstens 2; |
| - Phosphor | höchstens 0,045; |
| - Schwefel | höchstens 0,03; |
| - Stickstoff | höchstens 0,11; |

Rest: Eisen und herstellungsbedingte Verunreinigungen. Gemäß einer bevorzugten Ausgestaltung ist vorgesehen, dass die erste Werkstoffkomponente Silizium mit einem Anteil - in Masseprozent - von mindestens 1,5 bis höchstens 2,5 aufweist. Vorzugsweise ist die erste Werkstoffkomponente ein hitzebeständiger Stahl mit der Bezeichnung X15CrNiSi20-12 oder weist die Werkstoff-Nr. 1.4828 auf.

Gemäß der Erfindung ist vorgesehen, dass die zweite Werkstoffkomponente ein Element aufweist, welches ausgewählt ist aus einer Gruppe bestehend aus Iridium, Platin, Rhodium, Ruthenium, Palladium, und einem Metall der Gruppe der Seltenen Erden.

Unter einem Metall der Gruppe der Seltenen Erden, was auch als Seltenerd-Metall bezeichnet wird, wird insbesondere ein chemisches Element, auch in Form einer Verbindung und insbesondere einer Legierung mit wenigstens einem anderen chemischen Element, verstanden, welches zu der chemischen Gruppe der Seltenen Erden gehört. Dies sind insbesondere die chemischen Elemente der dritten Nebengruppe des Periodensystems mit Ausnahme des Actiniums, sowie die Lanthanoide. Das Seltenerd-Metall ist vorzugsweise ausgewählt aus einer Gruppe bestehend aus Scandium, Lanthan, Cer, Praseodym, Neodym, Promethium, Samarium, Europium, Yttrium, Gadolinium, Terbium, Dysprosium, Holmium, Erbium, Thulium, Ytterbium, und Lutetium. Bevorzugt ist das Seltenerd-Metall ausgewählt aus den sogenannten leichten Seltenerd-Elementen, nämlich einer Gruppe bestehend aus Scandium, Lanthan, Cer, Praseodym, Neodym, Promethium, Samarium, und Europium. Alternativ oder zusätzlich ist das Seltenerd-Metall bevorzugt ausgewählt aus der Gruppe der sogenannten schweren Seltenerd-Elemente, nämlich einer Gruppe bestehend aus Yttrium, Gadolinium, Terbium, Dysprosium, Holmium, Erbium, Thulium, Ytterbium, und Lutetium.

Alternativ ist erfindungsgemäß vorgesehen, dass die zweite Werkstoffkomponente aus einem dieser Elemente besteht. Die Elemente können in Reinform, aber auch in gebundener, legierter oder miteinander kombinierter oder legierter Form vorliegen. Insbesondere ist es möglich, dass die zweite Werkstoffkomponente neben wenigstens einem der hier genannten Elemente herstellungsbedingte Verunreinigungen aufweist. Bevorzugt weist die zweite Werkstoffkomponente eine Legierung auf, die Platin und Iridium, oder Iridium und Rhodium, aufweist, bevorzugt Platin-Iridium oder Iridium-Rhodium. Vorzugsweise besteht die zweite Werkstoffkomponente aus einer solchen Legierung. Bevorzugt weist die zweite Werkstoffkomponente eine Iridium-Legierung auf - oder besteht aus einer solchen -, die vorwiegend aus Iridium besteht, wobei sie vorzugsweise mindestens 95 Massen-% an Iridium aufweist. Die hier genannten Elemente und/oder Legierungen weisen sehr hohe Schmelzpunkte von über 1500 °C auf und sind darüber hinaus sowohl hitze- als auch korrosionsbeständig. Insbesondere sind die hier für die zweite Werkstoffkomponente genannten Materialien korrosionsbeständiger und edler als die zuvor für die erste Werkstoffkomponente genannten Materialien. Die für die zweite Werkstoffkomponente genannten Materialien sind außerdem teurer als die für die erste Werkstoffkomponente genannten Materialien. Der Verbundwerkstoff kann daher kostengünstig ausgebildet sein, wenn er die zweite Werkstoffkomponente partikelförmig in die erste Werkstoffkomponente eingelagert aufweist.

Die zweite Werkstoffkomponente kann insbesondere kleinere Mengen eines oder mehrerer Unedelmetalle aufweisen, insbesondere solche aus den Nebengruppen 3B und 4B des Periodensystems der Elemente, beispielsweise Zirkon, Titan, Hafnium und Yttrium.

Gemäß einer Weiterbildung der Erfindung ist vorgesehen, dass der Anteil der zweiten Werkstoffkomponente an dem Verbundwerkstoff - in Masseprozent - höchstens 80, vorzugsweise höchstens 70, vorzugsweise höchstens 60, vorzugsweise höchstens 50, vorzugsweise höchstens 40, vorzugsweise höchstens 30, vorzugsweise von mindestens 10 bis höchstens 30, vorzugsweise höchstens 20, vorzugsweise höchstens 10, beträgt. Dabei zeigt sich, dass günstige Eigenschaften in Hinblick auf die Erosions- und Korrosionsbeständigkeit des Verbundwerkstoffs auch schon bei relativ geringen Massenanteilen der zweiten Werkstoffkomponente erreicht werden können, wobei der Verbundwerkstoff umso kostengünstiger wird, je geringer der Anteil der zweiten Werkstoffkomponente ist.

Zusätzlich oder alternativ ist bevorzugt vorgesehen, dass ein Volumenverhältnis der zweiten Werkstoffkomponente zu der ersten Werkstoffkomponente von mindestens 10:90 bis höchstens 90:10, insbesondere von mindestens 30:70 bis höchstens 60:40, insbesondere 50:50, beträgt. Der Volumenanteil der zweiten Werkstoffkomponente kann insbesondere von mindestens 10 Vol.-% bis höchstens 90 Vol.-%, vorzugsweise von mindestens 20 Vol.-% bis höchstens 80 Vol.-%, vorzugsweise von mindestens 30 Vol.-% bis höchstens 70 Vol.-%, vorzugsweise von mindestens 40 Vol.-% bis höchstens 60 Vol.-%, vorzugsweise 50 Vol.-%, betragen.

Gemäß der Erfindung ist vorgesehen, dass die zweite Werkstoffkomponente in Form von Partikeln vorliegt, und in Form von Partikeln in die erste Werkstoffkomponente eingelagert ist, wobei die Partikel eine Partikelgröße von mindestens 5µm, vorzugsweise von mindestens 10 µm, bis höchstens 30 µm, vorzugsweise von mindestens 10 µm bis höchstens 20 µm, vorzugsweise von mindestens 15 µm bis höchstens 25 µm, aufweisen. Dieser Partikelgrößenbereich gewährleistet eine gute Funktionsweise einer mit dem Verbundwerkstoff hergestellten Entladungskomponente, wobei insbesondere zugleich aus dem Verbundwerkstoff herausgelöste Partikel der zweiten Werkstoffkomponente einen Betrieb einer Vorrichtung, welche die Entladungskomponente aufweist, nicht stören. Dabei können die Partikel insbesondere ohne weiteres durch ein Kühl- und/oder Schmiermittel ausgetragen werden. Je kleiner die Partikel bei gleichem Anteil der zweiten Werkstoffkomponente an dem Verbundwerkstoff sind, desto mehr Partikel weist der Verbundwerkstoff auf. Eine größere Partikelanzahl hat wiederum den Vorteil, dass bei einem Verschleiß des Verbundwerkstoffs mehr Partikel schneller an eine Grenzfläche oder in eine Abbrandzone gelangen. Weiterhin ergeben sich an einer Oberfläche des Verbundwerkstoffs mehr mögliche Orte für den Beginn von Entladungen.

Unter einer Partikelgröße wird hier insbesondere ein Äquivalentdurchmesser der Partikel verstanden. Insbesondere wird unter dem Begriff "Partikelgröße" ein geometrischer Äquivalentdurchmesser, insbesondere ein volumenäquivalenter Kugeldurchmesser oder ein oberflächenäquivalenter Kugeldurchmesser, verstanden. Ein geometrischer Äquivalentdurchmesser eines unregelmäßig geformten Partikels wird insbesondere erhalten, in dem der Durchmesser einer gedachten Kugel ermittelt wird, die das gleiche Volumen (volumenäquivalent) oder die gleiche Oberfläche (oberflächenäquivalent) aufweist wie der unregelmäßig geformte Partikel.

Weiterhin wird unter dem Begriff "Partikelgröße" insbesondere ein Mittelwert einer Äquivalentdurchmesserverteilung verstanden. Eine solche mittlere Partikelgröße kann beispielsweise nach der Linienschnittmethode bestimmt werden.

Die Partikelgröße der Partikel der zweiten Werkstoffkomponente kann kleiner, gleich groß, oder größer sein als eine Partikelgröße von Partikeln der ersten Werkstoffkomponente.

Die Aufgabe wird insbesondere auch gelöst, indem ein Verfahren zum Herstellen eines Verbundwerkstoffs nach einem der zuvor beschriebenen Ausführungsbeispiele geschaffen wird. Das Verfahren weist insbesondere folgende Schritte auf: Eine erste, pulverförmige metallische Werkstoffkomponente wird mit einer zweiten, pulverförmigen metallischen Werkstoffkomponente gemischt, wobei die erste Werkstoffkomponente und die zweite Werkstoffkomponente voneinander verschieden sind, und wobei die erste Werkstoffkomponente vorzugsweise einen niedrigeren Schmelzpunkt aufweist und erfindungsgemäß weniger edel ist als die zweite Werkstoffkomponente. Es wird ein Gemisch erhalten, welches die erste Werkstoffkomponente und die zweite Werkstoffkomponente aufweist. Unter einem Gemisch ist insbesondere auch ein Gemenge zu verstehen. Das Gemisch wird zu einem Formkörper geformt, und der Formkörper wird bei einer Sintertemperatur gesintert, die vorzugsweise kleiner ist als die Schmelztemperatur der zweiten Werkstoffkomponente. In Zusammenhang mit dem Verfahren verwirklichen sich insbesondere die Vorteile, die bereits in Zusammenhang mit dem Verbundwerkstoff erläutert wurden. Ist die Sintertemperatur niedriger als die Schmelztemperatur der zweiten Werkstoffkomponente, wird diese beim Sintern nicht aufgeschmolzen, sondern vielmehr in die erste Werkstoffkomponente eingelagert, wenn die erste Werkstoffkomponente einen niedrigeren Schmelzpunkt aufweist als die zweite Werkstoffkomponente. Insbesondere ergeben sich dann partikelförmige Einlagerungen der bevorzugt als granuläres Pulver vorliegenden zweiten Werkstoffkomponente in eine Matrix, die beim Sintern aus der ersten Werkstoffkomponente gebildet wird. Erfindungsgemäß wird dabei eine zusammenhängende Matrix der ersten Werkstoffkomponente gebildet, in welche die zweite Werkstoffkomponente partikelförmig eingelagert wird.

Gemäß einer Weiterbildung der Erfindung ist vorgesehen, dass eine Binderkomponente zu der ersten und/oder zu der zweiten Werkstoffkomponente zugemischt wird. Es wird in diesem Fall ein Gemisch erhalten, welches die erste Werkstoffkomponente, die zweite Werkstoffkomponente und die Binderkomponente aufweist.

Das Mischen der Binderkomponente mit der ersten und/oder der zweiten Werkstoffkomponente, und/oder das Mischen der ersten Werkstoffkomponente mit der zweiten Werkstoffkomponente erfolgt bevorzugt in einem Attritor, einem Knetmischer, einem Pulvermischer oder einem Extruder. Dabei erfolgt eine möglichst homogene, gleichmäßige Verteilung der verschiedenen Komponenten.

Das Gemisch wird vorzugsweise als rieselfähiges Pulver, als knetbare Masse oder als spritzgießfähige Masse hergestellt. Die entsprechende Ausgestaltung des Gemischs kann insbesondere durch Weglassen oder spezifische Auswahl der - vorzugsweise organischen - Binderkomponente eingestellt werden.

Gemäß einer Ausgestaltung des Verfahrens ist vorgesehen, dass zunächst die erste Werkstoffkomponente und die zweite Werkstoffkomponente miteinander vermischt werden, wobei dann zu einer derart hergestellten Mischung eine Binderkomponente hinzugemischt wird.

Gemäß einer anderen Ausgestaltung des Verfahrens ist vorgesehen, dass zunächst die erste Werkstoffkomponente mit einer Binderkomponente gemischt wird, wobei dann die zweite Werkstoffkomponente hinzugemischt wird. Es ist auch möglich, dass zunächst die zweite Werkstoffkomponente mit einer Binderkomponente vermischt wird, wobei anschließend die erste Werkstoffkomponente hinzugemischt wird. Schließlich ist es auch möglich, dass separat zunächst die erste Werkstoffkomponente mit einer Binderkomponente und die zweite Werkstoffkomponente mit einer Binderkomponente gemischt werden, wobei die so separat hergestellten Mischungen anschließend miteinander vermischt werden.

Vorzugsweise werden weitere Komponenten, insbesondere weitere Legierungselemente und/oder Additive zugemischt, wobei dies durch Zumischen zu der separaten, ersten pulverförmigen Werkstoffkomponente, der separaten, zweiten pulverförmigen Werkstoffkomponente, und/oder zu einer Mischung aus der ersten und der zweiten pulverförmigen Werkstoffkomponente - gegebenenfalls jeweils angereichert um eine Binderkomponente - erfolgen kann.

Vorzugsweise umfasst das Verfahren auch die Herstellung eines Pulvers der ersten Werkstoffkomponente und/oder der zweiten Werkstoffkomponente. Dabei wird insbesondere bei der Pulverherstellung der zweiten Werkstoffkomponente bevorzugt eine entstehende Partikelgröße für die in die erste Werkstoffkomponente einzulagernden Partikel der zweiten Werkstoffkomponente eingestellt.

Da die Sintertemperatur bevorzugt kleiner gewählt wird als die Schmelztemperatur der zweiten Werkstoffkomponente, wird diese dann nicht geschmolzen, sodass eine bevorzugt bei der Pulverherstellung eingestellte Partikelgröße auch in dem fertigen Verbundwerkstoff erhalten bleibt.

Durch Einwiegen der verschiedenen Komponenten kann die Zusammensetzung des Gemischs und damit letztlich auch des entstehenden Verbundwerkstoffs eingestellt werden. Vorzugsweise wird die zweite Werkstoffkomponente - bezogen auf den fertigen Verbundwerkstoff - mit einem Anteil von - in Masseprozent - höchstens 80, vorzugsweise höchstens 70, vorzugsweise höchstens 60, vorzugsweise höchstens 50, vorzugsweise höchstens 40, vorzugsweise höchstens 30, vorzugsweise höchstens 20, vorzugsweise höchstens 10, und/oder mit einem Volumenverhältnis von mindestens 10:90 bis höchstens 90:10, insbesondere von mindestens 30:70 bis höchstens 60:40, insbesondere 50:50, zugegeben.

Eine Bezugnahme auf den fertigen Verbundwerkstoff ist insoweit sinnvoll, als die gegebenenfalls vorhandene Binderkomponente bevorzugt spätestens beim Sintern entfernt wird, wobei spätestens dann eine thermische Entbinderung stattfindet. Es ist aber möglich, dass vor dem Sintern ein Entbinderungsschritt vorgenommen wird, mit welchem die Binderkomponente entfernt wird.

Dass das Gemisch zu einem Formkörper geformt wird, bedeutet insbesondere, dass dem Gemisch eine bestimmte, räumlich-geometrische Form verliehen wird. Vor dem Formen zu einem Formkörper liegt das Gemisch vorzugsweise in loser Schüttung, insbesondere als rieselfähiges Pulver, als knetbare Masse oder als spritzgießfähige Masse vor, und weist insoweit keine bestimmte Form auf. Durch das Formen wird dem Gemisch eine bestimmte räumliche Form, die vorzugsweise im Wesentlichen einer für den Verbundwerkstoff angestrebten Endform zumindest näherungsweise - insbesondere bis auf eine beim Sintern typischerweise auftretende Schwindung - entspricht, verliehen.

Unter einem Formkörper wird demnach insbesondere ein Körper mit einer bestimmten räumlich-geometrischen Form verstanden.

Es ist möglich, dass der Formkörper vor dem Sintern mechanisch nachbearbeitet wird. Insbesondere ist es möglich, dass der Formkörper durch Schneiden und Schleifen nachgeformt wird. Auf diese Weise kann die Form des Formkörpers noch näher einer gewünschten Endform für den Verbundwerkstoff angenähert werden.

Der Formkörper wird auch als Grünkörper oder Grünling bezeichnet.

Gemäß einer Weiterbildung der Erfindung ist vorgesehen, dass die Sintertemperatur so hoch gewählt wird, dass die pulverförmige, erste Werkstoffkomponente gesintert wird, wobei die einzelnen Pulverkörner der ersten Werkstoffkomponente miteinander insbesondere durch Diffusionsprozesse stoffschlüssig verbunden werden. Es ist möglich, dass die Sintertemperatur so hoch gewählt wird, dass eine Erweichung der ersten Werkstoffkomponente erfolgt.

Gemäß einer Weiterbildung der Erfindung ist vorgesehen, dass die Sintertemperatur kleiner gewählt wird als die Schmelztemperatur der ersten Werkstoffkomponente. Vorzugsweise wird die Sintertemperatur zu mindestens 60 % bis höchstens 80 % der Schmelztemperatur der ersten Werkstoffkomponente, vorzugsweise zu 80 % der Schmelztemperatur der ersten Werkstoffkomponente gewählt. Hierbei findet insbesondere ein Sinterprozess ohne Flüssigphase statt, wobei sich eine Verbindung der Pulverkörner der ersten Werkstoffkomponente insbesondere durch Volumendiffusion, Grenzflächendiffusion entlang von Korngrenzen, und/oder kristallplastisches Fließen ergibt. Der Formkörper erfährt dabei eine Schwindung, aber bevorzugt keine Veränderung seiner räumlich-geometrischen Form. Die Schwindung entspricht dabei insbesondere einer Skalierung der Abmessungen des Formkörpers.

Da die zweite Werkstoffkomponente bevorzugt eine höhere Schmelztemperatur aufweist als die erste Werkstoffkomponente, wird diese beim Sintern unter den zuvor genannten Bedingungen nicht erweicht und nicht geschmolzen. Vielmehr werden die insbesondere als Pulverkörner vorliegenden Partikel der zweiten Werkstoffkomponente in eine beim Sintern aus der ersten Werkstoffkomponente gebildete, zusammenhängende Matrix eingebettet.

Gemäß einer Weiterbildung der Erfindung ist vorgesehen, dass der insbesondere metallpulverspritzgegossene oder extrudierte Formkörper vor dem Sintern einem Entbinderungschritt unterzogen wird. Auf diese Weise kann die Binderkomponente, die im Wesentlichen zur besseren Formung des Gemischs zu dem Formkörper dient, vor dem Sintern entfernt werden. Bei dem Entbinderungsschritt kann es sich insbesondere um eine katalytische, chemische oder thermische Entbinderung handeln. Der Entbinderungsschritt kann auch mehrere Entbinderungs-Teilschritte aufweisen, wobei verschiedene Arten der Entbinderung miteinander kombiniert werden können, beispielsweise eine chemische Entbinderung in einem ersten Teilschritt und eine thermische Entbinderung in einem zweiten Teilschritt.

Bevorzugt erfolgt das Formen des Gemischs durch ein pulvermetallurgisches Verfahren.

Gemäß einer Weiterbildung der Erfindung ist vorgesehen, dass das Formen des Gemischs durch Pressen erfolgt. Das Gemisch liegt in diesem Fall vorzugsweise als Pressgranulat - insbesondere ohne eine Binderkomponente - vor, das in Form gepresst wird, wodurch der Formkörper hergestellt wird. Zusammen mit dem Sinterschritt wird insgesamt vorzugsweise ein Presssintern verwirklicht.

Alternativ ist vorgesehen, dass das Formen des Gemischs durch Extrudieren durchgeführt wird. Bevorzugt wird dabei ein als knetbare Masse vorliegendes Gemisch, das vorzugsweise eine Binderkomponente aufweist, extrudiert. Besonders bevorzugt wird der Formkörper durch Strangpressen hergestellt.

Alternativ ist es möglich, dass das Formen des Gemischs - insbesondere umfassend eine Binderkomponente - mittels Pulverspritzgießen durchgeführt wird. Besonders bevorzugt wird Metallpulverspritzgießen (metal injection molding - MIM) angewendet. Mit dieser Vorgehensweise können auch sehr komplexe Formen in einfacher Weise erhalten werden.

Es ist auch möglich, dass das Formen des Gemischs mittels eines generativen Verfahrens erfolgt. Insbesondere ist ein Schichtaufbauverfahren möglich. Gemäß einer bevorzugten Ausgestaltung wird das Gemisch durch Drucken geformt, insbesondere mittels eines 2D- oder 3D-Druckers.

Es ist insbesondere möglich, dass das Gemisch mittels eines 2D-Druckers oder eines 3D-Druckers auf ein Substrat gedruckt wird, mit welchem sich das Gemisch bevorzugt nicht verbindet. Insbesondere kann so ein Grünling gedruckt werden, der anschließend entbindert und als Bräunling gesintert werden kann.

Die bevorzugt erst bei höherer Temperatur schmelzenden Metallpulverpartikel der zweiten Werkstoffkomponente werden beim Sintern fest in die zusammensinternde Matrixlegierung der ersten Werkstoffkomponente eingebettet. Sie gehen dabei auf atomarer Ebene einen Werkstoffverbund mit dieser ein, sodass die Pulverpartikel der zweiten Werkstoffkomponente in das resultierende Sinterbauteil dauerhaft mechanisch stabil eingebunden sind.

Gemäß einer Weiterbildung der Erfindung ist vorgesehen, dass der Formkörper in einem Zweikomponentenspritzgussverfahren mit einem weiteren Formkörper verbunden wird, wobei der weitere Formkörper frei von der zweiten Werkstoffkomponente ist. Besonders bevorzugt wird der Formkörper in dem Zweikomponentenspritzgussverfahren an den weiteren Formkörper angeformt. Anschließend werden der Formkörper und der weitere Formkörper gemeinsam gesintert.

Dass der weitere Formkörper frei von der zweiten Werkstoffkomponente ist, bedeutet bevorzugt, dass er die zweite Werkstoffkomponente nicht aufweist. Besonders bevorzugt weist der weitere Formkörper nur die erste Werkstoffkomponente - und gegebenenfalls eine Binderkomponente - auf. Es ist dann insbesondere mittels des Zweikomponentenspritzgussverfahrens in einfacher und kostengünstiger Weise möglich, auch größere Teile, beispielsweise eine Elektrode mit einer Entladungskomponente, auszubilden, wobei nur ein für die Entladung relevanter Teil aus dem Verbundwerkstoff gefertigt sein kann, wobei andere Teile der Elektrode aus der kostengünstigen, ersten Werkstoffkomponente gefertigt sein können, ohne dass hierfür Material der zweiten Werkstoffkomponente bereitgestellt werden muss. Insbesondere ist eine komplexe geometrische Formung größerer, einstückiger Elemente, beispielsweise Elektroden, mit der Entladungskomponente aus dem Verbundwerkstoff möglich.

Alternativ ist es möglich, dass der Formkörper mit einem weiteren, separat gefertigten Formkörper verbunden wird, der frei von der zweiten Werkstoffkomponente ist. Auch in diesem Fall werden der Formkörper und der weitere Formkörper bevorzugt gemeinsam gesintert. Im Unterschied zu der zuvor beschriebenen Vorgehensweise wird allerdings kein Zweikomponentenspritzgussverfahren angewendet, sondern ein weiterer Formkörper wird separat - beispielsweise in einem separaten Metallpulverspritzgussverfahren oder durch Pressen oder Extrudieren - hergestellt und anschließend insbesondere in grünem Zustand mit dem Formkörper verbunden. Dies ist gegebenenfalls einfacher und kostengünstiger möglich als im weikomponentenspritzgussverfahren.

Es können auch mehr als zwei Formkörper miteinander verbunden werden.

Insbesondere kann in einem Zweikomponentenspritzgussverfahren ein Grünling hergestellt werden, an dem nur an ganz bestimmten Stellen der Verbundwerkstoff vorgesehen wird, wobei ein derart - zumindest gedanklich - aus mehreren Formkörpern bestehender Grünling in einem Folgeprozess ohne weitere Fügoperationen stoffschlüssig zusammengesintert werden kann. Auch ist es möglich, separat gefertigte Grünlinge des Verbundwerkstoffs mit solchen des Grundwerkstoffs, also der ersten Werkstoffkomponente, zu verbinden, und diese dann gemeinsam stoffschlüssig zu sintern.

Aufgrund des gleichen Wärmeausdehnungskoeffizienten der ersten Werkstoffkomponente in den verschiedenen Formkörpern sind derart gefertigte Stoffverbunde mechanisch deutlich stabiler als durch herkömmliche Fügeverfahren hergestellte und weisen daher eine erhöhte Lebensdauer auf.

Die Formkörper können insbesondere in gleichartigen Verfahren oder aber in verschiedenen Verfahren hergestellt sein. Beispielsweise ist es möglich, dass einer der Formkörper pulverspritzgegossen ist, wobei ein anderer der Formkörper gepresst oder extrudiert ist.

Gemäß einer Weiterbildung der Erfindung ist vorgesehen, dass der Formkörper mit einem weiteren Körper, insbesondere einem Grundkörper für eine Elektrode, stoff- und/oder formschlüssig verbunden wird. Auch auf diese Weise kann einfach, schnell und kostengünstig ein Bauteil, insbesondere eine Elektrode, hergestellt werden, welches den Verbundwerkstoff nur in ausgewählten Bereichen aufweist.

Es ist insbesondere möglich, dass ein Hybridspritzgussverfahren angewendet wird, wobei der Formkörper an einen Einleger angespritzt wird, oder wobei ein Einleger mit dem Formkörper umspritzt wird. Der Einleger ist vorzugsweise nicht durch Sintern hergestellt. Er kann vorzugsweise spanend hergestellt sein, beispielsweise als Drehteil. Der Formkörper wird vorzugsweise in Gegenwart des Einlegers gesintert. Der Einleger weist bevorzugt die erste Werkstoffkomponente auf, welche auch der Formkörper aufweist, oder der Einleger besteht aus dieser ersten Werkstoffkomponente. So ergibt sich eine besonders feste und dauerhafte Verbindung zwischen dem Formkörper und dem Einleger.

Die Aufgabe wird schließlich auch gelöst, indem eine Entladungskomponente geschaffen wird, welche den Verbundwerkstoff gemäß einer der zuvor beschriebenen Ausführungsbeispiele aufweist oder aus dem Verbundwerkstoff besteht. Dabei ergeben sich insbesondere die Vorteile, die bereits in Zusammenhang mit dem Verbundwerkstoff und dem Verfahren erläutert wurden. Die Entladungskomponente ist bevorzugt hergestellt in einer der zuvor beschriebenen Ausführungsformen des Verfahrens.

Bevorzugt wird auch eine Elektrodenanordnung, welche wenigstens zwei Elektroden aufweist, wobei wenigstens eine der Elektroden eine Entladungskomponente nach einem der zuvor beschriebenen Ausführungsbeispiele aufweist.

Bevorzugt weist ein Grundkörper einer Elektrode, welche eine Entladungskomponente mit dem Verbundwerkstoff aufweist, die erste Werkstoffkomponente als Material auf oder besteht aus der ersten Werkstoffkomponente. In diesem Fall ist es besonders einfach, die - insbesondere zuvor im Rahmen einer Ausführungsform des Verfahrens hergestellte - Entladungskomponente stoffschlüssig mit dem Grundkörper der Elektrode zu verbinden, beispielsweise durch Schweißen, da der Matrixwerkstoff des Verbundwerkstoffs, nämlich die erste Werkstoffkomponente, den gleichen oder einen ähnlichen Wärmeausdehnungskoeffizient und auch sonst gleiche oder ähnliche Werkstoffeigenschaften aufweist wie der Grundkörper der Elektrode. Zum Verbinden der Entladungskomponente mit dem Grundkörper können insbesondere erprobte Standard-Schweißverfahren angewendet werden, beispielsweise elektrisches Widerstandsschweißen und/oder Schweißen allein durch Stromwärme.

Es ist daher möglich, an wenigstens einer Elektrode nur lokal die Entladungskomponente mit dem Verbundwerkstoff anzuordnen, wodurch teures Material eingespart werden kann.

Es ist aber auch möglich, eine gesamte Elektrode oder sogar eine gesamte Elektrodenanordnung im Rahmen des zuvor beschriebenen Verfahrens herzustellen, wobei ein Grundkörper der wenigstens einen Elektrode bevorzugt als weiterer Formkörper hergestellt oder bereitgestellt wird, der in grünem Zustand - entweder durch Zweikomponentenspritzgießen oder durch separate Herstellung und Verbindung in grünem Zustand - mit dem Verbundwerkstoff für die Entladungskomponente verbunden wird.

Bevorzugt wird ein Ausführungsbeispiel der Elektrodenanordnung, welche wenigstens zwei Elektroden aufweist, nämlich insbesondere eine Elektrode und eine Gegenelektrode, beispielweise eine Elektrode, welche mit einem von Null verschiedenen Potential beaufschlagt wird, und eine Massenelektrode, wobei vorgesehen ist, dass jede der Elektroden eine Entladungskomponente nach einem der zuvor beschriebenen Ausführungsbeispiele aufweist, wobei vorzugsweise vorgesehen ist, dass die Entladungskomponenten der wenigstens zwei Elektroden einen gleichartigen Verbundwerkstoff, insbesondere denselben Verbundwerkstoff, aufweisen, oder aus einem gleichartigen Verbundwerkstoff, insbesondere aus demselben Verbundwerkstoff, bestehen.

Die Beschreibung des Verbundwerkstoffs und der Entladungskomponente sowie der Elektrodenanordnung einerseits und des Verfahrens andererseits sind komplementär zueinander zu verstehen. Merkmale des Verbundwerkstoffs, der Entladungskomponente oder der Elektrodenanordnung, die explizit oder implizit in Zusammenhang mit dem Verfahren beschrieben wurden, sind bevorzugt einzeln oder miteinander kombiniert Merkmale eines bevorzugten Ausführungsbeispiels des Verbundwerkstoffs, der Entladungskomponente oder der Elektrodenanordnung. Verfahrensschritte, die explizit oder implizit in Zusammenhang mit dem Verbundwerkstoff, der Entladungskomponente oder der Elektrodenanordnung beschrieben wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, welcher durch wenigstens ein Merkmal eines erfindungsgemäßen oder bevorzugten Ausführungsbeispiels des Verbundwerkstoffs, der Entladungskomponente und/oder der Elektrodenanordnung bedingt ist. Der Verbundwerkstoff, die Entladungskomponente und/oder die Elektrodenanordnung zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines Ausführungsbeispiels einer Entladungskomponente mit einem Ausführungsbeispiels des Verbundwerkstoff, und
- Figur 2: eine schematische Darstellung der Funktionsweise der Entladungskomponente gemäß Figur 1.

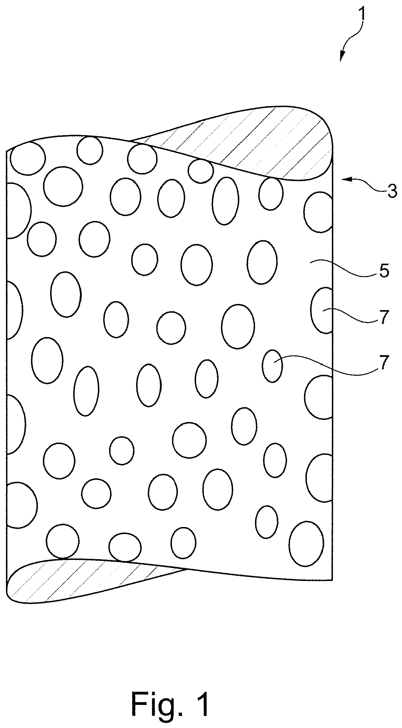

**Fig.1** zeigt eine schematische Darstellung eines Ausführungsbeispiels einer Entladungskomponente 1, die aus einem Ausführungsbeispiel eines Verbundwerkstoffs 3 besteht. Dieser weist eine erste metallische Werkstoffkomponente 5 sowie eine zweite metallische Werkstoffkomponente 7 auf, wobei die erste Werkstoffkomponente 5 und die zweite Werkstoffkomponente 7 voneinander verschieden sind, und wobei die erste Werkstoffkomponente 5 hier einen niedrigeren Schmelzpunkt aufweist als die zweite Werkstoffkomponente 7. Dabei ist die zweite Werkstoffkomponente 7 hier partikelförmig in die erste Werkstoffkomponente 5 eingelagert. Der besseren Übersichtlichkeit wegen sind hier nur zwei Partikel der zweiten Werkstoffkomponente 7 mit dem Bezugszeichen 7 gekennzeichnet.

Die erste Werkstoffkomponente 5 bildet bei dem dargestellten Ausführungsbeispiel eine zusammenhängende Matrix, in welche die zweite Werkstoffkomponente 7 in Form der in Figur 1 dargestellten Partikel eingebettet ist. Dabei zeigt sich, dass die zweite Werkstoffkomponente 7 diskontinuierlich, hier insbesondere in Form separater Partikel, in die erste Werkstoffkomponente 5 eingelagert ist.

Die zweite Werkstoffkomponente 7 ist edler als die erste Werkstoffkomponente 5, was insbesondere bedeutet, dass die zweite Werkstoffkomponente 7 ein größeres Standardpotential als die erste Werkstoffkomponente 5 aufweist. Die zweite Werkstoffkomponente 7 weist insbesondere ein Standardpotential auf, welches größer ist als Null. Bevorzugt weist auch die erste Werkstoffkomponente 5 ein Standardpotential auf, welches größer ist als Null. Es ist aber auch möglich, dass die erste Werkstoffkomponente 5 ein negatives Standardpotential aufweist.

Die erste Werkstoffkomponente 5 weist eine Nickelbasislegierung oder eine umformbare Eisenlegierung, insbesondere einen Stahl, bevorzugt einen rostfreien Stahl, auf, oder besteht aus einem dieser Materialien. Alternativ ist vorgesehen, dass die erste Werkstoffkomponente 5 Nickel und Chrom aufweist, wobei Nickel einen Hauptbestandteil der ersten Werkstoffkomponente 5 bildet, und wobei Chrom einen wichtigsten Nebenbestandteil, insbesondere im Sinne eines größten Massenanteils bezogen auf alle Nebenkomponenten, bildet.

Die zweite Werkstoffkomponente 7 weist wenigstens ein Element auf, welches ausgewählt ist aus einer Gruppe bestehend aus Iridium, Platin, Rhodium, Ruthenium, Palladium, und einem Seltenerd-Metall. Es ist möglich, dass die zweite Werkstoffkomponente 7 aus einem der genannten Elemente besteht. Vorzugsweise weist die zweite Werkstoffkomponente 7 eine Legierung oder Kombination aus wenigstens zwei dieser Elemente auf, insbesondere eine Legierung, die Platin und Iridium, oder Iridium und Rhodium, aufweist, bevorzugt Platin-Iridium oder Iridium-Rhodium, oder die zweite Werkstoffkomponente 7 besteht aus einer solchen Kombination oder Legierung.

Ein Anteil der zweiten Werkstoffkomponente 7 an dem Verbundwerkstoff 3 beträgt - in Masseprozent - bevorzugt höchstens 80, vorzugsweise höchstens 70, vorzugsweise höchstens 60, vorzugsweise höchstens 50, vorzugsweise höchstens 40, vorzugsweise höchstens 30, vorzugsweise höchstens 20, vorzugsweise höchstens 10.

Die zweite Werkstoffkomponente 7 liegt in Form von Partikeln vor, die eine Partikelgröße von mindestens 5 µm bis höchstens 30 µm aufweisen.

Der Verbundwerkstoff 3 wird hergestellt, indem die erste, metallische Werkstoffkomponente 5 in Pulverform mit der zweiten, ebenfalls in Pulverform vorliegenden, metallischen Werkstoffkomponente 7 gemischt wird. Bevorzugt wird eine Binderkomponente zu der ersten Werkstoffkomponente 5, zu der zweiten Werkstoffkomponente 7 und/oder zu dem Gemisch der Werkstoffkomponenten 5, 7 zugemischt. Insgesamt wird so ein Gemisch erhalten, welches letztlich die erste Werkstoffkomponente 5, die zweite Werkstoffkomponente 7 und vorzugsweise die Binderkomponente umfasst. Dieses Gemisch wird zu einem Formkörper geformt, der anschließend bei einer Sintertemperatur gesintert wird, die kleiner ist als die Schmelztemperatur der zweiten Werkstoffkomponente 7, vorzugsweise kleiner als die Schmelztemperatur der ersten Werkstoffkomponente 5, und besonders bevorzugt von mindestens 0,6 bis höchstens 0,8 multipliziert mit der Schmelztemperatur der ersten Werkstoffkomponente, vorzugsweise 0,8 multipliziert mit der Schmelztemperatur der ersten Werkstoffkomponente, beträgt.

Vorzugsweise wird eine homogene Mischung der Werkstoffkomponenten 5, 7 erzeugt, wobei insbesondere die Partikel der zweiten Werkstoffkomponente 7 vereinzelt zwischen Teilchen der ersten Werkstoffkomponente 5 angeordnet sind. Beim Sintern entsteht dadurch eine zusammenhängende Matrix aus der ersten Werkstoffkomponente 5, in welche die Partikel der zweiten Werkstoffkomponente 7 separat, insbesondere also unzusammenhängend, eingebettet sind.

Das Formen des Gemischs zu dem Formkörper erfolgt vorzugsweise durch Pressen, Extrudieren oder Pulverspritzgießen, insbesondere durch Metallpulverspritzgießen.

Vorzugsweise wird ein insbesondere pulverspritzgegossener oder extrudierter Formkörper vor dem Sintern einem Entbinderungsschritt unterzogen, der gegebenenfalls mehrere Entbinderungs-Teilschritte aufweisen kann.

Es ist möglich, dass der Formkörper in einem Zweikomponentenspritzgussverfahren mit einem weiteren Formkörper, insbesondere einem weiteren Grünkörper, verbunden, insbesondere an den weiteren Formkörper angespritzt wird, wobei der weitere Formkörper frei ist von der zweiten Werkstoffkomponente 7 und bevorzugt nur die erste Werkstoffkomponente 5 und gegebenenfalls eine Binderkomponente aufweist. Auf diese Weise kann einstückig eine größere Komponente geschaffen werden, welche die Entladungskomponente aus dem Verbundwerkstoff 3 aufweist. Beispielsweise kann eine Elektrode geschaffen werden, die nur in einem bestimmten Bereich oder in verschiedenen bestimmten Bereichen die Entladungskomponente 1 aus dem Verbundwerkstoff 3 aufweist.

Dies kann auch erreicht werden, indem der Formkörper in grünem Zustand, also als Grünkörper oder Grünling, mit einem weiteren, separat gefertigten Formkörper, der vorzugsweise als Grünkörper oder Grünling vorliegt, verbunden wird, wobei der weitere Formkörper auch in diesem Fall frei von der zweiten Werkstoffkomponente 7 ist und vorzugsweise nur die erste Werkstoffkomponente 5 und bevorzugt zusätzlich eine Binderkomponente aufweist. Die beiden Formkörper können auch in diesem Fall gemeinsam gesintert werden.

Die beiden Formkörper können insbesondere in gleichartigen Verfahren oder aber in verschiedenen Verfahren hergestellt sein. Beispielsweise ist es möglich, dass einer der Formkörper pulverspritzgegossen ist, wobei der andere der Formkörper gepresst oder extrudiert ist.

Es ist auch möglich, dass ein Hybridspritzgussverfahren angewendet wird, wobei der Formkörper an einen Einleger angespritzt wird, oder wobei ein Einleger mit dem Formkörper umspritzt wird. Der Einleger kann spanend hergestellt sein, beispielsweise als Drehteil. Der Formkörper wird vorzugsweise in Gegenwart des Einlegers gesintert.

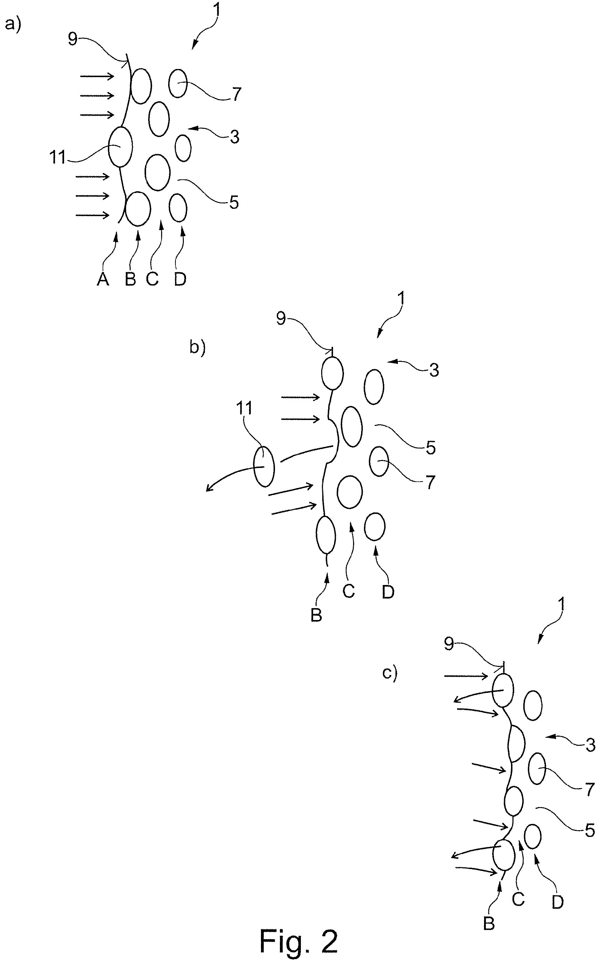

**Fig. 2** zeigt eine schematische Darstellung der Funktionsweise der Entladungskomponente 1 mit dem Verbundwerkstoff 3. Gleiche und funktionsgleiche Elemente sind mit gleichen Bezugszeichen versehen, sodass insofern auf die vorangegangene Beschreibung verwiesen wird. Dabei ist in Figur 2 insbesondere mit auf eine Oberfläche 9 weisenden Pfeilen dargestellt, wie eine Entladung die Oberfläche 9 der Entladungskomponente 1 beeinträchtigt, wobei die Entladung insbesondere zu einer Erosion und/oder zu einer Korrosion der Entladungskomponente 1 im Bereich der Oberfläche 9 führt. Dies führt - wie schematisch angedeutet - zunächst zu einem Abbrand des Matrixwerkstoffs, mithin der ersten Werkstoffkomponente 5. Dadurch werden Partikel der zweiten Werkstoffkomponente 7 freigelegt, wobei in Figur 2 a) - in radialer Richtung von der Oberfläche 9 senkrecht ins Innere der Entladungskomponente 1 weisend - vier Partikelreihen A, B, C, D schematisch dargestellt sind. Ein Partikel 11 in der ersten Partikelreihe A ist bereits durch Erosion und/oder Korrosion der Oberfläche 9 teilweise freigelegt.

In Figur 2 b) ist dargestellt, dass bei weiterer Beaufschlagung der Entladungskomponente 1 mit Entladungen und fortgesetzter Erosion und/oder Korrosion sich der Partikel 11 irgendwann aus dem Matrixverbund des ersten Matrixwerkstoffs 5 löst und - wie durch einen Pfeil und einen Strich angedeutet, aus der Oberfläche 9 herausfällt. Durch den fortgesetzten Abbrand der Oberfläche 9 wird also die radial äußerste Partikelreihe A aufgelöst, und die dahinter angeordnete, zweite Partikelreihe B rückt quasi nach und wird zur neuen ersten Partikelreihe. Der Abbrand erfolgt im Wesentlichen im Bereich der weniger edlen und einen niedrigeren Schmelzpunkt aufweisenden ersten Werkstoffkomponente 5.

Figur 2 c) zeigt daher, dass nach einer gewissen weiteren Beaufschlagung in dem Bereich, in dem vorher der Partikel 11 angeordnet war, nunmehr so viel Material der ersten Werkstoffkomponente 5 abgebrannt ist, dass weitere Partikel aus der dritten Partikelreihe C exponiert sind. Diese quasi nachrückenden Partikel übernehmen dann die Funktion des herausgelösten Partikels 11.

Es zeigt sich, dass es mit dem Verbundwerkstoff 3 möglich ist, eine größere Fläche bei lokal reduziertem Verschleiß mit gleichen Werkstoffkosten für eine Entladung bereitzustellen, als wenn an der für die Entladung wirksamen Fläche ausschließlich die zweite Werkstoffkomponente 7 exponiert wäre.

Eine Zündenergie, die zur Ausbildung der Entladung aufgewendet werden muss, kann auf kleine Bereiche, insbesondere die Partikel der zweiten Werkstoffkomponente 7, konzentriert werden, sodass es möglich ist, mit vergleichsweise geringen Zündspannungen zu arbeiten. Dies reduziert den Verschleiß der Entladungskomponente zusätzlich.

Weiterhin zeigt sich, dass typischerweise bei Entladungskomponenten nur ein bestimmter Verschleiß in Form insbesondere einer radialen Abbrandsstrecke von typischerweise etwa 200 µm hinnehmbar ist, wonach die Entladungskomponente 1 oder sogar die gesamte Elektrode ausgetauscht werden muss. Es ist nun möglich, den Verbundwerkstoff 3 nur über diese vorgesehene Abbrandsstrecke als Entladungskomponente an einer Elektrode anzuordnen, und einen restlichen Grundkörper der Elektrode aus einem kostengünstigen Werkstoff, beispielsweise aus der ersten Werkstoffkomponente 5, zu bilden. Nach vollendetem Abbrand der Entladungskomponente 1 verbleibt dann zur Entsorgung nur noch die kostengünstige, erste Werkstoffkomponente 5, sodass eine entsprechende Elektrode mit einer Entladungskomponente 1 deutlich kostengünstiger ist als eine insgesamt ein teures, beständigeres Material aufweisende Elektrode.

## Patentansprüche

1. Verbundwerkstoff (3), mit
- einer ersten metallischen Werkstoffkomponente (5), und mit
- einer zweiten metallischen Werkstoffkomponente (7), wobei
- die erste Werkstoffkomponente (5) von der zweiten Werkstoffkomponente (7) verschieden ist, und wobei
- die zweite Werkstoffkomponente (7) mit der ersten Werkstoffkomponente (5) vermengt ist, wobei
- die erste Werkstoffkomponente (5) eine zusammenhängende Matrix bildet, in welcher die zweite Werkstoffkomponente (7) partikelförmig eingelagert ist, wobei
- die zweite Werkstoffkomponente (7) in Form von Partikeln mit einer Partikelgröße von mindestens 5 µm bis höchstens 30 µm in die erste Werkstoffkomponente eingelagert ist, und wobei
- die zweite Werkstoffkomponente (7) edler ist als die erste Werkstoffkomponente (5),
- wobei die erste Werkstoffkomponente (5)
a) eine Nickelbasislegierung oder eine umformbare Eisenlegierung aufweist, oder aus einer Nickelbasislegierung oder einer umformbaren Eisenlegierung besteht, und/oder
b) Nickel und Chrom aufweist, wobei die Legierung Nickel als Hauptkomponente und Chrom als wichtigste Nebenkomponente aufweist, und
- wobei die zweite Werkstoffkomponente (7) ein Element aufweist, das ausgewählt ist aus einer Gruppe bestehend aus Iridium, Platin, Rhodium, Ruthenium, Palladium, und einem Seltenerd-Metall, oder dass die zweite Werkstoffkomponente (7) aus einem dieser Elemente besteht.

2. Verbundwerkstoff (3) nach Anspruch 1, **dadurch gekennzeichnet, dass**
a) die zweite Werkstoffkomponente (7) diskontinuierlich, insbesondere in Form separater Partikel, in die erste Werkstoffkomponente (5) eingelagert ist, und/oder dass
b) die zweite Werkstoffkomponente (7) in Form von Partikeln mit einer Partikelgröße von mindestens 10 µm bis höchstens 30 µm, vorzugsweise von mindestens 10 µm bis höchstens 20 µm, vorzugsweise von mindestens 15 µm bis höchstens 25 µm, in die erste Werkstoffkomponente (5) eingelagert ist.

3. Verbundwerkstoff (3) nach einem der vorhergehenden Ansprüche, **dadurch gekennzeichnet, dass** die erste Werkstoffkomponente (5) einen niedrigeren Schmelzpunkt aufweist als die zweite Werkstoffkomponente (7).

4. Verbundwerkstoff (3) nach einem der vorhergehenden Ansprüche, **dadurch gekennzeichnet, dass**
a) ein Anteil der zweiten Werkstoffkomponente (7) an dem Verbundwerkstoff - in Masseprozent - höchstens 80, vorzugsweise höchstens 70, vorzugsweise höchstens 60, vorzugsweise höchstens 50, vorzugsweise höchstens 40, vorzugsweise höchstens 30, vorzugsweise von mindestens 10 bis höchstens 30, vorzugsweise höchstens 20, vorzugsweise höchstens 10, beträgt, und/oder
b) dass ein Volumenverhältnis der zweiten Werkstoffkomponente zu der ersten Werkstoffkomponente von mindestens 10:90 bis höchstens 90:10, insbesondere von mindestens 30:70 bis höchstens 60:40, insbesondere 50:50, beträgt.

5. Entladungskomponente (1), aufweisend einen Verbundwerkstoff (3), nach einem der Ansprüche 1 bis 4, oder bestehend aus einem solchen Verbundwerkstoff.

6. Verfahren zum Herstellen eines Verbundwerkstoffs (3) nach einem der Ansprüche 1 bis 4, mit folgenden Schritten:
- Mischen einer ersten, pulverförmigen metallischen Werkstoffkomponente (5) mit einer zweiten, pulverförmigen metallischen Werkstoffkomponente (7), wobei die erste Werkstoffkomponente (5) von der zweiten Werkstoffkomponente (7) verschieden ist, und wobei die erste Werkstoffkomponente (5) weniger edel ist als die zweite Werkstoffkomponente (7), wobei die erste Werkstoffkomponente (5) eine zusammenhängende Matrix bildet, in welcher die zweite Werkstoffkomponente (7) partikelförmig eingelagert wird, wobei die zweite Werkstoffkomponente (7) in Form von Partikeln mit einer Partikelgröße von mindestens 5 µm bis höchstens 30 µm in die erste Werkstoffkomponente eingelagert wird, und wobei die erste Werkstoffkomponente (5) vorzugsweise einen niedrigeren Schmelzpunkt aufweist als die zweite Werkstoffkomponente (7); wobei
- die erste Werkstoffkomponente (5)
a) eine Nickelbasislegierung oder eine umformbare Eisenlegierung aufweist, oder aus einer Nickelbasislegierung oder einer umformbaren Eisenlegierung besteht, und/oder
b) Nickel und Chrom aufweist, wobei die Legierung Nickel als Hauptkomponente und Chrom als wichtigste Nebenkomponente aufweist, und
- die zweite Werkstoffkomponente (7) ein Element aufweist, das ausgewählt ist aus einer Gruppe bestehend aus Iridium, Platin, Rhodium, Ruthenium, Palladium, und einem Seltenerd-Metall, oder dass die zweite Werkstoffkomponente (7) aus einem dieser Elemente besteht;
- Erhalten eines Gemischs, umfassend die erste Werkstoffkomponente (5) und die zweite Werkstoffkomponente (7);
- Formen des Gemischs zu einem Formkörper, und
- Sintern des Formkörpers, insbesondere bei einer Sintertemperatur, die kleiner ist als die Schmelztemperatur der zweiten Werkstoffkomponente (7).

7. Verfahren nach Anspruch 6, **gekennzeichnet durch** folgende Schritte:
- Zumischen einer Binderkomponente zu der ersten Werkstoffkomponente (5) und/oder zu der zweiten Werkstoffkomponente (7), wobei
- das erhaltene Gemisch die erste Werkstoffkomponente (5), die zweite Werkstoffkomponente (7) und die Binderkomponente umfasst.

8. Verfahren nach einem der Ansprüche 6 und 7, **dadurch gekennzeichnet, dass** die Sintertemperatur kleiner gewählt wird als die Schmelztemperatur der ersten Werkstoffkomponente (5), wobei die Sintertemperatur bevorzugt zu 0,8 multipliziert mit der Schmelztemperatur der ersten Werkstoffkomponente (5) gewählt wird.

9. Verfahren nach einem der Ansprüche 7 und 8, **dadurch gekennzeichnet, dass** der Formkörper vor dem Sintern einem Entbinderungsschritt unterzogen wird.

10. Verfahren nach einem der Ansprüche 6 bis 9, **dadurch gekennzeichnet, dass** das Formen des Gemischs durch ein Verfahren der Pulvermetallurgie, insbesondere durch Extrudieren, Pulverspritzgießen, insbesondere Metallpulverspritzgießen, oder ein generatives Verfahren, insbesondere Drucken, durchgeführt wird.

11. Verfahren nach einem der Ansprüche 6 bis 9, **dadurch gekennzeichnet, dass** das Formen des Gemischs durch Pressen durchgeführt wird.

12. Verfahren nach einem der Ansprüche 6 bis 11, **dadurch gekennzeichnet, dass** der Formkörper
a) in einem Zweikomponentenspritzgussverfahren mit einem weiteren Formkörper verbunden wird, wobei der weitere Formkörper frei ist von der zweiten Werkstoffkomponente (7), oder
b) mit einem weiteren, separat gefertigten Formkörper verbunden wird, der frei ist von der zweiten Werkstoffkomponente (7), wobei
der Formkörper und der weitere Formkörper gemeinsam gesintert werden.

13. Verfahren nach einem der Ansprüche 6 bis 12, **dadurch gekennzeichnet, dass** der Formkörper mit einem weiteren Körper, insbesondere einem Grundkörper für eine Elektrode, stoff- und/oder formschlüssig verbunden wird.

## Claims

1. A composite material (3), comprising
- a first metallic material component (5), and comprising
- a second metallic material component (7), wherein
- the first material component (5) is different from the second material component (7), and wherein
- the second material component (7) is mixed with the first material component (5), wherein
- the first material component (5) forms a cohesive matrix, into which the second material component (7) is embedded in particulate form, wherein
- the second material component (7) is embedded into the first material component (5) in the form of particles with a particle size of at least 5 µm to at most 30 µm, wherein
- the second material component (7) is more noble than the first material component (5),
- wherein the first material component (5)
a) comprises a nickel-based alloy or a malleable iron alloy or consists of a nickel-based alloy or a malleable iron alloy, and/or
b) comprises nickel and chromium, wherein the alloy comprises nickel as main component and chromium as the most important minor component, and
- wherein the second material component (7) comprises an element selected from a group consisting of iridium, platinum, rhodium, ruthenium, palladium and a rare earth metal, or in that the second material component (7) consists of one of these elements.

2. The composite material (3) according to claim 1, **characterized in that**
a) the second material component (7) is embedded discontinuously, in particular in the form of separate particles, into the first material component (5), and/or **in that**
b) the second material component (7) is embedded into the first material component (5) in the form of particles with a particle size of at least 10 µm up to at most 30 µm, preferably of at least 10 µm to up to at most 20 µm, preferably of at least 15 µm up to at most 25 µm.

3. The composite material (3) according to any one of the preceding claims, **characterized in that** the first material component (5) has a lower melting point than the second material component (7).

4. The composite material (3) according to any one of the preceding claims, **characterized in that**
a) a portion of the second material component (7) of the composite material - in percent by weight - amounts to at most 80, preferably at most 70, preferably at most 60, preferably at most 50, preferably at most 40, preferably at most 30, preferably of at least 10 to at most 30, preferably at most 20, preferably at most 10, and/or
b) **in that** a volume ratio of the second material component to the first material component amounts to at least 10:90 to at most 90:10, in particular from at least 30:70 to at most 60:40, in particular 50:50.

5. A discharge component (1), comprising a composite material (3) according to any one of claims 1 to 4 or consisting of such a composite material.

6. A method for producing a composite material (3), in particular a composite material (3) according to any one of claims 1 to 4, comprising the following steps:
- mixing a first powdered metallic material component (5) with a second powdered metallic material component (7), wherein the first material component (5) is different from the second material component (7), and wherein the first material component (5) is less noble than the second material component (7), wherein the first material component (5) forms a cohesive matrix, into which the second material component (7) is embedded in particulate form, wherein the second material component (7) is embedded into the first material component (5) in the form of particles with a particle size of at least 5 µm to at most 30 µm, and wherein the first material component (5) preferably has a lower melting point than the second material component (7); wherein
- the first material component (5)
a) comprises a nickel-based alloy or a malleable iron alloy or consists of a nickel-based alloy or a malleable iron alloy, and/or
b) comprises nickel and chromium, wherein the alloy comprises nickel as main component and chromium as the most important minor component, and
- wherein the second material component (7) comprises an element selected from a group consisting of iridium, platinum, rhodium, ruthenium, palladium and a rare earth metal, or in that the second material component (7) consists of one of these elements;
- preparing a mixture, comprising the first material component (5) and the second material component (7);
- shaping the mixture into a moulded body, and
- sintering the moulded body, in particular at a sintering temperature lower than the melting point of the second material component (7).

7. The method according to claim 6, **characterized by** the following steps:
- mixing a binder component with the first material component (5) and/or with the second material component (7), wherein
- the resulting mixture comprises the first material component (5), the second material component (7) and the binder component.

8. The method according to any one of claims 6 and 7, **characterized in that** the sintering temperature is selected to be lower than the melting point of the first material component (5), wherein the sintering temperature is preferably selected to be 0.8 multiplied by the melting point of the first material component (5).

9. The method according to any one of claims 7 and 8, **characterized in that** the moulded body is subjected to a binder removal step before sintering.

10. The method according to any one of claims 6 to 9, **characterized in that** the shaping of the mixture is carried out by a powder metallurgy method, in particular by extrusion, powder injection moulding, in particular metal powder injection moulding or a generative method, in particular printing.

11. The method according to any one of claims 6 to 9, **characterized in that** the shaping of the mixture is carried out by pressing.

12. The method according to any one of claims 6 to 11, **characterized in that** the moulded body
a) is joined to another moulded body in a two-component injection moulding method, wherein the additional moulded body is free of the second material component (7), or
b) is joined to another moulded body produced separately, said moulded body being free of the second material component (7), wherein
the moulded body and the additional moulded body are sintered jointly.

13. The method according to any one of claims 6 to 12, **characterized in that** the moulded body is joined to an additional body, in particular a base body for an electrode in a form-fitting and/or physically bonded connection.

## Revendications

1. Matériau composite (3) avec
- un premier composant de matériau (5) métallique, et avec
- un second composant de matériau (7) métallique, dans lequel
- le premier composant de matériau (5) est différent du second composant de matériau (7), et dans lequel
- le second composant de matériau (7) est mélangé avec le premier composant de matériau (5), dans lequel
- le premier composant de matériau (5) forme une matrice contiguë, dans laquelle le second composant de matériau (7) est intégré sous forme de particules, dans lequel
- le second composant de matériau (7) est intégré dans le premier composant de matériau sous forme de particules avec une granulométrie d'au moins 5 µm jusqu'à au plus 30 µm, et dans lequel
- le second composant de matériau (7) est plus noble que le premier composant de matériau (5),
- dans lequel le premier composant de matériau (5)
a) comporte un alliage à base de nickel ou un alliage de fer déformable, ou consiste d'un alliage à base de nickel ou un alliage de fer déformable, et/ou
b) comporte du nickel et du chrome, l'alliage comportant le nickel en tant que composant principal et le chrome en tant que composant secondaire plus important, et
- dans lequel le second composant de matériau (7) comporte un élément choisi dans un groupe consistant en l'iridium, le platine, le rhodium, le ruthénium, le palladium et un métal de terre rare, ou le second composant de matériau (7) consiste en l'un de ces éléments.

2. Matériau composite (3) selon la revendication 1, **caractérisé en ce que**
a) le second composant de matériau (7) est intégré dans le premier composant de matériau (5) de manière discontinue, notamment sous forme de particules séparées, et/ou que
b) le second composant de matériau (7) est intégré dans le premier composant de matériau (5) sous forme de particules avec une granulométrie d'au moins 10 µm jusqu'à au plus 30 µm, de préférence d'au moins 10 µm jusqu'à au plus 20 µm, de préférence d'au moins 15 µm jusqu'à au plus 25 µm.

3. Matériau composite (3) selon l'une quelconque des revendications précédentes, **caractérisé en ce que** le premier composant de matériau (5) a un point de fusion plus bas que le second composant de matériau (7).

4. Matériau composite (3) selon l'une quelconque des revendications précédentes, **caractérisé en ce que**
a) une proportion du second composant de matériau (7) dans le matériau composite - en pourcentage en masse - est au plus 80, de préférence au plus 70, de préférence au plus 60, de préférence au plus 50, de préférence au plus 40, de préférence au plus 30, de préférence d'au moins 10 à au plus 30, de préférence au plus 20, de préférence au plus 10, et/ou
b) qu'un rapport volumique du second composant de matériau par rapport au premier composant de matériau est d'au moins 10 : 90 jusqu'à au plus 90 : 10, notamment d'au moins 30 : 70 jusqu'à au plus 60 : 40, notamment de 50 : 50.

5. Composant à décharge (1), comportant un matériau composite (3) selon l'une quelconque des revendications 1 à 4, ou consistant d'un tel matériau composite.

6. Procédé pour la fabrication d'un matériau composite (3) selon l'une quelconque des revendications 1 à 4, avec les étapes suivantes consistant à :
- mélanger un premier composant de matériau (5) métallique sous forme de poudre avec un second composant de matériau (7) métallique sous forme de poudre, le premier composant de matériau (5) étant différent du second composant de matériau (7), et le premier composant de matériau (5) étant moins noble que le second composant de matériau (7), dans lequel le premier composant de matériau (5) forme une matrice contiguë dans laquelle le second composant de matériau (7) est intégré sous forme de particules, le second composant de matériau (7) étant intégré dans le premier composant de matériau sous forme de particules avec une granulométrie d'au moins 5 µm jusqu'à au plus 30 µm, et le premier composant de matériau (5) ayant de préférence un point de fusion plus bas que le second composant de matériau (7), dans lequel
- le premier composant de matériau (5)
a) comporte un alliage à base de nickel ou un alliage de fer déformable, ou consiste d'un alliage à base de nickel ou un alliage de fer déformable, et/ou
b) comporte du nickel et du chrome, l'alliage comportant le nickel en tant que composant principal et le chrome en tant que composant secondaire plus important, et
- le second composant de matériau (7) comporte un élément choisi dans un groupe consistant en l'iridium, le platine, le rhodium, le ruthénium, le palladium et un métal de terre rare, ou que le second composant de matériau (7) consiste en l'un de ces éléments ;
- obtenir un mélange comprenant le premier composant de matériau (5) et le second composant de matériau (7),
- former le mélange en un corps moulé, et
- fritter le corps moulé, notamment à une température de frittage qui est inférieure à la température de fusion du second composant de matériau (7).

7. Procédé selon la revendication 6, **caractérisé par** les étapes suivantes consistant à :
- ajouter un composant liant au premier composant de matériau (5) et/ou au second composant de matériau (7), dans lequel
- le mélange obtenu comprend le premier composant de matériau (5), le second composant de matériau (7) et le composant liant.

8. Procédé selon l'une quelconque des revendications 6 et 7, **caractérisé en ce que** la température de frittage est choisie de manière à être inférieure à la température de fusion du premier composant de matériau (5), la température de frittage de préférence étant choisie de manière à être 0,8 multiplié avec la température de fusion du premier composant de matériau (5).

9. Procédé selon l'une quelconque des revendications 7 et 8, **caractérisé en ce que** le corps moulé est soumis à une étape de déliantage avant le frittage.

10. Procédé selon l'une quelconque des revendications 6 à 9, **caractérisé en ce que** la mise en forme du mélange est effectué par un procédé de métallurgie des poudres, notamment par l'extrusion, moulage par injection de poudre, notamment moulage par injection de poudre de métal, ou un procédé génératif, notamment l'impression.

11. Procédé selon l'une quelconque des revendications 6 à 9, **caractérisé en ce que** la mise en forme du mélange est effectué par compression.

12. Procédé selon l'une quelconque des revendications 6 à 11, **caractérisé en ce que** le corps moulé
a) est relié à un autre corps moulé dans un procédé de moulage par injection à deux composants, l'autre corps moulé étant libre du second composant de matériau (7), ou
b) est relié á un autre corps moulé séparément fabriqué qui est libre du second composant de matériau (7), dans lequel
le corps moulé et l'autre corps moulé sont frittés ensemble.

13. Procédé selon l'une quelconque des revendications 6 à 12, **caractérisé en ce que** le corps moulé est relié à un autre corps, notamment un corps de base pour une électrode, par liaison de matière et/ou liaison par engagement positif.
